# DEMANDE DE BREVET EUROPEEN

(11) **EP 4 310 694 A1**
(43) Date de publication de la demande: **24.01.2024**
(21) Numéro de dépôt: 23187039.5
(22) Date de dépôt: 21.07.2023
(51) Int. Cl.: G06F 16/25, G06F 16/33, G06F 16/953

(54) **ARCHITECTURE DE SYSTEME DE COLLECTE DE DONNEES**

(30) Priorité: 21.07.2022 FR 2207489
(71) Demandeur: Airbus CyberSecurity SAS, 78990 Elancourt (FR)
(72) Inventeur: DEY, Alexandre, 78990 ELANCOURT (FR); COSTE, Benjamin, 78990 ELANCOURT (FR)
(74) Mandataire: Cabinet Le Guen Maillet

(57) **Abrégé**

Un système (100) est configuré pour effectuer une collecte de données auprès de plateformes informatiques accessibles via des interfaces d'accès (101, 102, 103), et comporte : un métamoteur de recherche (130) opérant sous un format générique de requêtes afin d'ordonner la collecte de données ; un traducteur (120) transcrivant les requêtes générées par le métamoteur de recherche (130) dans le format générique en requêtes spécifiquement adaptées aux interfaces d'accès (101, 102, 103) des plateformes informatiques auxquelles lesdites requêtes sont destinées, le traducteur (120) étant équipé d'un greffon (111, 112, 113) spécifique à chaque dite interface d'accès (101, 102, 103) ; un gestionnaire d'identité (140) paramétrant le traducteur (120) avec des paramètres d'accès spécifiques aux plateformes informatiques auxquelles lesdites requêtes sont destinées, et un orchestrateur (150) configuré pour coordonner le métamoteur de recherche (130) et le gestionnaire d'identité (140), afin de réaliser la collecte de données auprès des plateformes informatiques.

## Description

### DOMAINE TECHNIQUE

La présente invention concerne le domaine de la collecte de données disponibles sur des plateformes informatiques rendues accessibles via un ou plusieurs réseaux de communication, telles que des plateformes d'hébergement de réseaux sociaux.

### ETAT DE LA TECHNIQUE ANTERIEURE

La collecte de données disponibles sur des plateformes informatiques rendues accessibles via un ou plusieurs réseaux de communication, et plus particulièrement la collecte de données sur les réseaux sociaux, est un sujet complexe du fait de la multitude des plateformes concernées, ayant chacune des spécificités et des restrictions d'accès automatiques aux données évoluant constamment.

De ce fait, plusieurs plateformes de collecte de données ont émergé ces dernières années, mais celles-ci diffèrent en périmètre (plateformes supportées, accès au web profond (« Deep web » en anglais, aussi appelé web invisible), accès au web clandestin (« Dark web » en anglais), etc.), ainsi qu'en capacité de pré-traitement des données collectées (reconnaissance optique de caractère (« Optical Character Recognition » en anglais), recherche inversée d'images (« Image Reverse Search » en anglais), traduction automatique, analyse automatique d'émotions, extraction d'entités nommées, etc.), ce qui induit des interfaces d'accès aux fonctionnalités extrêmement diverses et mouvantes.

Du point de vue d'un analyste souhaitant bénéficier des capacités des différentes plateformes, la gestion automatique et unifiée de chaque source de données pose un problème de conception d'une architecture de système (outil) de collecte de données aisément adaptable au caractère mouvant des plateformes sources de données.

Il est alors souhaitable de pallier au moins cet inconvénient de l'état de la technique antérieure, et ce, de manière simple, efficace et peu coûteuse. Il est notamment souhaitable de fournir une solution de collecte de données qui soit flexible, et aisément adaptable en cas de changement de fonctionnalités et d'accès aux plateformes sources de données.

### EXPOSE DE L'INVENTION

A cet effet, il est proposé un système de collecte de données destiné à effectuer une collecte de données auprès de plateformes informatiques accessibles via des interfaces d'accès, le système de collecte de données comportant : un métamoteur de recherche configuré pour opérer sous un format générique de requêtes afin d'ordonner la collecte de données ; un traducteur configuré pour transcrire les requêtes générées par le métamoteur de recherche dans le format générique en requêtes spécifiquement adaptées aux interfaces d'accès des plateformes informatiques auxquelles lesdites requêtes sont destinées, le traducteur étant équipé d'un greffon spécifique à chaque dite interface d'accès ; un gestionnaire d'identité configuré pour paramétrer le traducteur avec des paramètres d'accès spécifiques aux plateformes informatiques auxquelles lesdites requêtes sont destinées ; et un orchestrateur configuré pour coordonner le métamoteur de recherche et le gestionnaire d'identité, afin de réaliser la collecte de données auprès des plateformes informatiques. Ainsi, particulièrement grâce à la mise en place du traducteur et des greffons, la collecte de données est flexible et aisément adaptable en cas de changement de fonctionnalités et d'accès aux plateformes informatiques (e.g., réseaux sociaux), qui sont sources de données.

Dans un mode de réalisation particulier, le métamoteur de recherche comporte trois sous-métamoteurs de recherche : un premier sous-métamoteur de recherche dédié à des programmations de surveillance régulière par collecte de données ; un deuxième sous-métamoteur de recherche dédié aux requêtes à vocation unique, afin de permettre d'effectuer une collecte immédiate de données à la demande ; et un troisième sous-métamoteur de recherche dédié à une investigation ponctuelle par recherches itératives.

Dans un mode de réalisation particulier, le premier sous-métamoteur de recherche est configuré pour utiliser un descripteur d'entités à surveiller et un descripteur de filtrage comportant des caractéristiques de filtres.

Dans un mode de réalisation particulier, le premier sous-métamoteur de recherche et/ou le troisième sous-métamoteur de recherche sont configurés pour utiliser un descripteur de contraintes comportant des informations de contraintes d'identité et/ou de contraintes de priorité.

Dans un mode de réalisation particulier, le deuxième sous-métamoteur de recherche et/ou le troisième sous-métamoteur de recherche sont configurés pour utiliser un descripteur de règles relatives à des ressources servant de référence à la collecte de données, et un descripteur de règles relatives à des entités servant de référence à la collecte de données.

Dans un mode de réalisation particulier, le gestionnaire d'identité est configuré pour utiliser un descripteur d'informations d'identification, un descripteur d'informations de mandataire, et un descripteur de comportement et d'artefacts.

Dans un mode de réalisation particulier, le métamoteur de recherche est configuré pour opérer sous un format générique de réponses afin de traiter la collecte de données, et le traducteur est configuré pour transcrire des réponses reçues via les interfaces d'accès en réponses au format générique.

Dans un mode de réalisation particulier, au moins un moteur de recherche est implémenté dans au moins un greffon respectif pour réaliser recherche et collecte de données auprès de la plateforme informatique à laquelle ledit greffon correspond spécifiquement.

Il est aussi proposé un procédé de collecte de données destiné à effectuer une collecte de données auprès de plateformes informatiques accessibles via des interfaces d'accès, le procédé étant implémenté par un système de collecte de données, le procédé comportant : générer, par un métamoteur de recherche du système de collecte de données, sous un format générique, des requêtes afin d'ordonner la collecte de données ; transcrire, par un traducteur du système de collecte de données, les requêtes générées par le métamoteur de recherche dans le format générique en requêtes spécifiquement adaptées aux interfaces d'accès des plateformes informatiques auxquelles lesdites requêtes sont destinées, le traducteur étant équipé d'un greffon spécifique à chaque dite interface d'accès ; paramétrer le traducteur, par un gestionnaire d'identité du système de collecte de données, avec des paramètres d'accès spécifiques aux plateformes informatiques auxquelles lesdites requêtes sont destinées, et coordonner le métamoteur de recherche et le gestionnaire d'identité, par un orchestrateur du système de collecte de données, afin de réaliser la collecte de données auprès des plateformes informatiques.

Il est aussi proposé un produit programme d'ordinateur comportant des instructions pour implémenter le procédé présenté ci-dessus, lorsque lesdites instructions sont exécutées par un processeur. Il est aussi proposé un support de stockage d'informations (non transitoire) stockant un programme d'ordinateur comportant des instructions pour implémenter le procédé présenté ci-dessus, lorsque lesdites instructions sont lues depuis le support de stockage d'informations et exécutées par un processeur.

### BREVE DESCRIPTION DES DESSINS

La description suivante d'au moins un mode de réalisation est établie en relation avec les dessins joints, parmi lesquels :
[Fig. 1] illustre schématiquement une architecture de système de collecte de données ;
[Fig. 2] illustre schématiquement un exemple d'unité matérielle permettant l'implémentation de l'architecture de système de collecte de données de la Fig. 1 ;
[Fig. 3] illustre schématiquement un agencement particulier de métamoteur de recherche de l'architecture de système de collecte de données de la Fig. 1 ; et
[Fig. 4] illustre schématiquement un organigramme d'un algorithme de collecte de données implémenté par l'architecture de système de collecte de données de la Fig. 1.

### EXPOSE DETAILLE DE MODES DE REALISATION

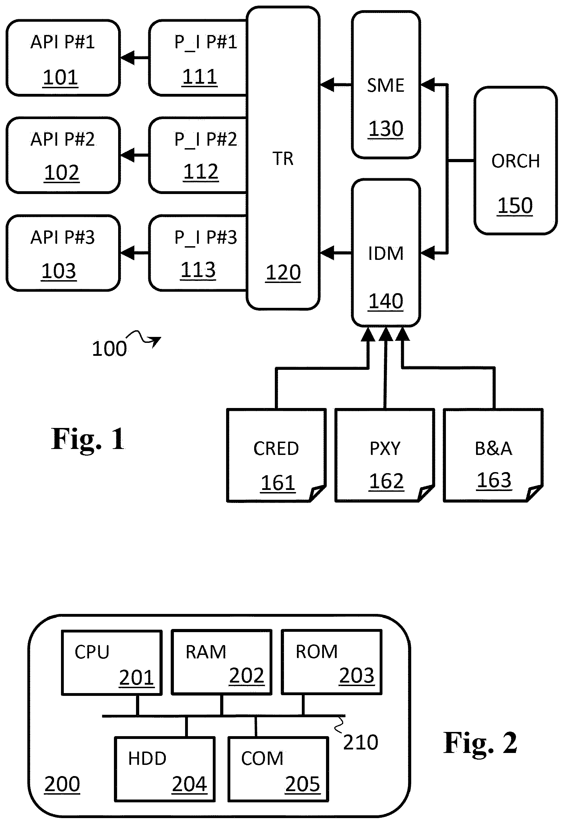

La Fig. 1 illustre schématiquement une architecture d'un système 100 de collecte de données. Un tel système 100 de collecte de données est notamment particulièrement adapté au domaine de la veille informationnelle.

La collecte de données est effectuée auprès de plateformes informatiques rendues accessibles via un ou plusieurs réseaux de communication, telles que des plateformes d'hébergement de réseaux sociaux ou des bases de données. Des échanges avec ces plateformes informatiques sont réalisés grâce à des interfaces d'accès, appelées API (« Application Programming Interface » en anglais), qui permettent d'accéder à ces plateformes informatiques et d'effectuer des requêtes auprès de ces plateformes informatiques afin de collecter des données qui y sont disponibles. Ces interfaces d'accès forment une couche d'abstraction des fonctions ou services internes fournis par lesdites plateformes informatiques, en exposant de manière prédéfinie les fonctionnalités offertes par ces services. Ainsi, la manière d'accéder à ces plateformes informatiques (e.g., combinaison d'identifiant d'utilisateur et de mot de passe) et à leurs services (e.g., réseaux sociaux), ainsi que le format des requêtes et réponses qui en découlent, est prédéfinie par ces interfaces d'accès. De manière purement illustrative, trois interfaces d'accès API P#1 101, API P#2 102 et API P#3 103 sont représentées sur la Fig. 1.

Pour s'adapter à ces interfaces d'accès, le système 100 de collecte de données comporte en outre des greffons (« plugin » en anglais) adaptés auxdites interfaces d'accès. Le système 100 de collecte de données comporte un tel greffon pour chaque interface d'accès. Ainsi, sur la Fig. 1, le système 100 de collecte de données comporte trois greffons P_I P#1 111, P_I P#2 112 et P_I P#3 113 pour respectivement les trois interfaces d'accès API P#1 101, API P#2 102 et API P#3 103.

Le système 100 de collecte de données comporte en outre un traducteur TR 120. Le traducteur TR 120 est équipé desdits greffons P_I P#1 111, P_I P#2 112 et P_I P#3 113 et transcrit des requêtes de collecte de données, dans un format générique, en requêtes spécifiquement adaptées à l'interface d'accès de la plateforme informatique à laquelle lesdites requêtes de collecte de données sont destinées. De plus, le traducteur TR 120 transcrit des réponses auxdites requêtes, qui sont donc reçues dans un format spécifique audit greffon, en réponses dans un format générique. Ainsi, grâce au transducteur TR 120, les requêtes et les réponses correspondantes sont respectivement générées et exploitées sous un même format au sein du système 100 de collecte de données. Les opérations de transcription susmentionnées sont des opérations conjointes du traducteur TR 120 et des greffons P_I P#1 111, P_I P#2 112 et P_I P#3 113, le traducteur TR 120 fournissant le cadre général de transcription et chacun des greffons P_I P#1 111, P_I P#2 112 et P_I P#3 113 fournissant l'extension nécessaire à l'adaptation à la plateforme informatique (e.g., réseau social) à laquelle le greffon en question est dédié.

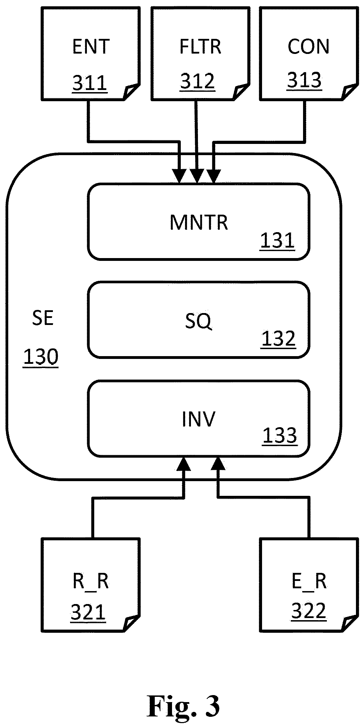

De manière à générer ces requêtes, et à traiter les réponses correspondantes, le système 100 de collecte de données comporte un métamoteur de recherche SME 130. Un mode de réalisation avantageux du métamoteur de recherche SME 130 est détaillé ci-après en relation avec la Fig. 3. Un métamoteur de recherche est un gestionnaire commun à plusieurs moteurs de recherche et implémente donc une fonction d'interfaçage et de centralisation de recherche et collecte de données réalisées auprès des différentes plateformes informatiques (e.g., réseaux sociaux). Dans le cas présent, les moteurs de recherche font préférentiellement partie des fonctions, implémentées par les plateformes informatiques (e.g., réseaux sociaux), qui sont exportées et rendues accessibles par les interfaces d'accès API P#1 101, API P#2 102 et API P#3 103. En variante, un ou plusieurs moteurs de recherche peuvent être implémentés directement dans le système 100 de collecte de données, par exemple pour fournir des fonctionnalités plus avancées que le moteur de recherche qui serait fourni par la plateforme informatique (e.g., réseau social) considérée ou pour exploiter un algorithme de recherche de données plus performant. Dans cette variante, chaque moteur de recherche qui est implémenté directement dans le système 100 de collecte de données est inclus dans le greffon P_I P#1 111, P_I P#2 112 ou P_I P#3 113 correspondant à la plateforme informatique (e.g., réseau social) pour laquelle le moteur de recherche en question opère.

Le métamoteur de recherche SME 130 opère donc sous le format générique de requêtes et de réponses évoqué ci-dessus, afin d'ordonner la collecte de données. Le traducteur TR 120 et les greffons P_I P#1 111, P_I P#2 112 et P_I P#3 113 permettent ainsi au métamoteur de recherche SME 130 d'opérer de manière indépendante des plateformes informatiques auprès desquelles les données sont collectées.

Le système 100 de collecte de données comporte en outre un gestionnaire d'identités IDM 140. Le gestionnaire d'identités IDM 140 est en charge de paramétrer le traducteur TR 120 avec des paramètres d'accès spécifiques à la plateforme informatique (e.g., réseau social) auprès de laquelle une requête de collecte de données doit être transmise. Ainsi, grâce à ce paramétrage, la plateforme informatique en question est accédée en utilisant une identité choisie (e.g., login et mot de passe) en accord avec les contraintes d'accès imposées par la plateforme informatique (e.g., réseau social) en question.

Le gestionnaire d'identités IDM 140 utilise préférentiellement, pour ce faire, un descripteur CRED 161 d'informations d'identification (« credentials » en anglais) comprenant, pour chaque plateforme informatique (e.g., réseau social), une association d'au moins un identifiant de connexion à ladite plateforme informatique, un mot de passe de connexion correspondant audit identifiant de connexion et un identifiant de ladite plateforme informatique suffisant pour accéder à ladite plateforme informatique, tel qu'une URL (« Uniform Resource Locator » en anglais) d'un réseau social, d'un blog, d'un site web....

Le gestionnaire d'identités IDM 140 utilise aussi préférentiellement un descripteur PXY 162 d'informations de mandataire (« proxy » en anglais) comprenant, pour chaque plateforme informatique (e.g., réseau social), si nécessaire pour accéder à ladite plateforme informatique, au moins une information de localisation d'un dispositif mandataire, d'un type et/ou identifiant de réseau de communication sur lequel ledit dispositif mandataire est localisé (réseau LTE (« Long-Terme Evolution » en anglais), FFTH (« Fiber-To-The-Home » en anglais)...) et des identifiants d'adresse IP (« Internet Protocol » en anglais) et de numéro de port dudit dispositif mandataire.

Le gestionnaire d'identités IDM 140 utilise aussi préférentiellement un descripteur B&A 163 de comportement et d'artefacts comprenant, pour chaque plateforme informatique (e.g., réseau social), au moins une information de contexte applicatif (navigateur, application dédiée... avec, au besoin, un numéro de version associé) à utiliser pour se connecter à ladite plateforme informatique, une information de moment et/ou de durée de connexion (si la plateforme impose des limitations de cet ordre) et une information de sujet ou de thème concerné par la collecte de données, comme par exemple un ensemble de mots-clefs représentatifs dudit sujet ou thème.

Les descripteurs évoqués ci-dessus peuvent être réalisés sous forme de fichiers, selon un format d'édition prédéfini, permettant ainsi d'aisément modifier les informations relatives aux plateformes informatiques (e.g., réseaux sociaux) utiles au système 100 de collecte de données pour effectuer de la collecte de données auprès desdites plateformes informatiques.

Le système 100 de collecte de données comporte en outre un orchestrateur ORCH 150. L'orchestrateur ORCH 150 est en charge de coordonner les opérations du métamoteur de recherche SME 130 et du gestionnaire d'identités IDM 140, pour répondre à des sollicitations de collecte de données émanant d'un système d'analyse externe, typiquement via une interface de communication, ou d'un opérateur humain, typiquement via une interface homme-machine (non représentée sur la Fig. 1) du système 100 de collecte de données.

Ainsi, quand une nouvelle plateforme informatique (e.g., accès à un nouveau réseau social) doit être supportée, le système 100 de collecte de données peut être aisément adapté en ajoutant un nouveau greffon, dédié à l'interface d'accès correspondant à cette nouvelle plateforme informatique, au traducteur TR 120. Aucun changement n'est nécessaire au sein de l'orchestrateur ORCH 150, ni du métamoteur de recherche SME 130, ni du gestionnaire d'identités IDM 140. De même, lorsqu'une évolution de l'interface d'accès (e.g., changement de méthode d'accès à des fonctionnalités) est nécessaire, seul le greffon dédié à l'interface d'accès correspondant à la plateforme informatique concernée doit être modifié. Seuls de nouveaux paramètres peuvent devoir être ajoutés aux descripteurs utilisés par le gestionnaire d'identités IDM 140, pour prendre en compte cette nouvelle plateforme informatique ou des évolutions de compte d'accès à une plateforme informatique (e.g, compte utilisateur de réseau social) ou de conditions d'accès (e.g., déclaration d'un dispositif mandataire) à une plateforme informatique. L'architecture de système 100 de collecte de données présentée à la Fig. 1 est donc flexible et aisément adaptable.

La Fig. 2 illustre schématiquement un exemple d'unité matérielle 200 adaptée pour implémenter le système 100 de collecte de données.

L'unité matérielle 200 comprend, reliés par un bus de communication 210 : un processeur ou CPU (pour « Central Processing Unit » en anglais) 201, ou une grappe de tels processeurs, comme par exemple des GPU (« Graphics Processing Units » en anglais) ; une mémoire vive RAM (pour « Random Access Memory » en anglais) 202 ; une mémoire morte ROM (pour « Read Only Memory » en anglais) 203, ou une mémoire réinscriptible de type EEPROM (« Electrically Erasable Programmable ROM » en anglais), par exemple de type Flash ; un dispositif de stockage de données, tel qu'un disque dur HDD (pour « Hard Disk Drive » en anglais) 204, ou un lecteur de support de stockage, tel qu'un lecteur de cartes SD (pour « Secure Digital » en anglais) ; un ensemble d'interfaces d'entrées et/ou sorties, telles que des interfaces de communication 205, permettant notamment au système 100 de collecte de données d'interagir avec d'autres équipements et notamment avec les plateformes informatiques auprès desquelles les collectes de données sont effectuées.

Le processeur 201 est capable d'exécuter des instructions chargées dans la RAM 202 à partir de la ROM 203, d'une mémoire externe (non représentée), d'un support de stockage, tel qu'une carte SD ou le disque dur HDD 204, ou d'un réseau de communication. Lorsque l'unité matérielle 200 est mise sous tension, le processeur 201 est capable de lire de la RAM 202 des instructions et de les exécuter. Ces instructions forment un programme d'ordinateur causant l'implémentation, par le processeur 201, de l'architecture et des procédés décrits ici.

Tout ou partie des étapes, comportements et algorithmes décrit ici peut ainsi être implémenté sous forme logicielle par exécution d'un ensemble d'instructions par une machine programmable, telle qu'un DSP (« Digital Signal Processor » en anglais) ou un processeur, ou être implémenté sous forme matérielle par une machine ou un composant (« chip » en anglais) dédié ou un ensemble de composants dédié (« chipset » en anglais), tel qu'un FPGA (pour « Field-Programmable Gate Array » en anglais) ou un ASIC (pour « Application-Specific Integrated Circuit » en anglais).

D'une manière générale, le système 100 de collecte de données comprend donc de la circuiterie électronique agencée et configurée pour implémenter les étapes, comportements et algorithmes décrits ici.

La Fig. 3 illustre schématiquement le métamoteur de recherche SME 130, dans un mode de réalisation particulier.

Le métamoteur de recherche SME 130 comporte alors un premier sous-métamoteur de recherche MNTOR 131 dédié à des programmations de surveillance (« monitoring » en anglais) régulière par collecte de données. La surveillance régulière est associée à une mémorisation d'historique des requêtes effectuées dans le cadre de ladite surveillance régulière, ainsi que des données collectées, permettant ainsi de déterminer ou détecter une éventuelle évolution dans les données collectées. La mémorisation des requêtes permet de solliciter la plateforme informatique concernée sans préjuger de ses capacités d'historicisation.

Le premier sous-métamoteur de recherche MNTOR 131 utilise préférentiellement, pour ce faire, un descripteur ENT 311 d'entités à surveiller, telles que des utilisateurs particuliers, des groupes particuliers...

Le premier sous-métamoteur de recherche MNTOR 131 utilise préférentiellement aussi un descripteur FLTR 312 de filtrage comportant des caractéristiques de filtres, tels que des mots-clefs, des sélections de plateformes informatiques (e.g., réseaux sociaux) à cibler, des créneaux horaires de collecte de données...

Le premier sous-métamoteur de recherche MNTOR 131 utilise préférentiellement aussi un descripteur CON 313 de contraintes comportant des informations de contraintes d'identité et/ou de contraintes de priorité.

Les descripteurs évoqués ci-dessus peuvent être réalisés sous forme de fichiers, selon un format d'édition prédéfini, permettant ainsi d'aisément modifier les informations relatives à la surveillance régulière par le système 100 de collecte de données.

Le métamoteur de recherche SME 130 comporte aussi un deuxième sous-métamoteur de recherche SQ 132 dédié aux requêtes à vocation unique (« single query » en anglais), afin de permettre d'effectuer une collecte immédiate de données à la demande.

Le métamoteur de recherche SME 130 comporte aussi un troisième sous-métamoteur de recherche INV 133 dédié à une investigation ponctuelle par recherches itératives. C'est une approche à mi-chemin entre le fonctionnement du premier sous-métamoteur de recherche MNTOR 131 et du deuxième sous-métamoteur de recherche SQ 132. Là où la surveillance régulière effectuée par le premier sous-métamoteur de recherche MNTOR 131 concerne un large spectre de données mais une faible profondeur de recherche, l'investigation ponctuelle concerne un spectre plus restreint de données (par exemple, autour d'une entité (personne) détectée lors de la surveillance régulière et/ou autour d'une image précédemment collectée lors de la surveillance régulière) mais avec une profondeur de recherche plus importante (i.e., cumul de plusieurs recherches successives en définissant, pour une nouvelle itération de recherche, un pivot autour de données collectées lors d'une itération de recherche précédente).

Le troisième sous-métamoteur de recherche INV 133 utilise préférentiellement des descripteurs de règles qui constituent des points d'entrée de la collecte de données à réaliser pour l'investigation ponctuelle, permettant ainsi de réduire le spectre de recherche. Chaque descripteur de règle correspond à une méthodologie de recherche spécifique, par exemple une méthodologie de recherche de données à partir d'une image et une méthodologie de recherche à partir d'une identité de personne. Ces descripteurs de règles peuvent aussi être utilisés par le deuxième sous-métamoteur de recherche SQ 132.

Le deuxième sous-métamoteur de recherche SQ 132 et/ou le troisième sous-métamoteur de recherche INV 133 utilisent par exemple, pour ce faire, un descripteur R_R 321 de règles relatives à des ressources servant de référence à la collecte de données, comme par exemple une image autour de laquelle l'investigation est à réaliser (i.e., collecte de données se rapportant à cette image).

Le deuxième sous-métamoteur de recherche SQ 132 et/ou le troisième sous-métamoteur de recherche INV 133 utilisent par exemple, pour ce faire, un descripteur E_R 322 de règles relatives à des entités servant de référence à la collecte de données, comme par exemple une identité de personne autour de laquelle l'investigation est à réaliser (i.e., collecte de données se rapportant à cette personne).

Le troisième sous-métamoteur de recherche INV 133 peut aussi utiliser le descripteur CON 313 de contraintes évoqué ci-dessus en relation avec le premier sous-métamoteur de recherche MNTOR 131.

Les descripteurs évoqués ci-dessus peuvent être réalisés sous forme de fichiers, selon un format d'édition prédéfini, permettant ainsi d'aisément modifier les informations relatives aux investigations ponctuelles menées par le système 100 de collecte de données.

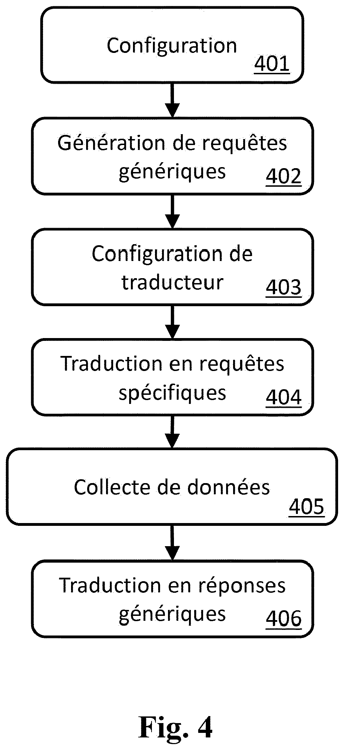

La Fig. 4 illustre schématiquement un organigramme d'un algorithme de collecte de données implémenté par le système 100 de collecte de données.

Dans une étape 401, le système 100 de collecte de données se configure pour répondre à un besoin de collecte de données, typiquement pour réaliser une veille informationnelle. Par exemple, le système 100 de collecte de données se configure pour réaliser une programmation de surveillance régulière par collecte de données, ou pour effectuer une requête de collecte de données à vocation unique, ou pour effectuer une investigation ponctuelle. L'orchestrateur ORCH 150 coordonne le métamoteur de recherche SME 130 et le gestionnaire d'identités IDM 140, afin de réaliser la collecte de données auprès des plateformes informatiques (e.g., réseaux sociaux). Cela déclenche une génération, dans une étape 402 par le métamoteur de recherche SME 130, de requêtes génériques adaptées à la collecte de données à réaliser, ainsi qu'un paramétrage du traducteur TRAD 120, dans une étape 403 par le gestionnaire d'identités IDM 140, avec des paramètres d'accès spécifiques aux plateformes informatiques (e.g., réseaux sociaux) auxquelles les requêtes de collecte de données sont adressées.

Dans une étape 404, le traducteur TRAD 120, à l'aide de chaque greffon P_I P#1 111, P_I P#2 112 et P_I P#3 113 dédié à une plateforme informatique à laquelle au moins une requête de collecte de données doit être adressée, traduit les requêtes génériques générées par le métamoteur de recherche SME 130 en requêtes spécifiquement adaptées aux interfaces d'accès API P#1 101, API P#2 102 et API P#3 103 des plateformes informatiques auxquelles lesdites requêtes sont destinées.

Dans une étape 405, le système 100 de collecte de données effectue la collecte de données par transmission desdites requêtes spécifiquement adaptées aux interfaces d'accès API P#1 101, API P#2 102 et API P#3 103, et reçoit des réponses correspondantes qui incluent les données collectées.

Dans une étape 406, le traducteur TRAD 120, à l'aide de chaque greffon P_I P#1 111, P_I P#2 112 et P_I P#3 113 dédié à une plateforme informatique à laquelle au moins une requête de collecte de données a été adressée, traduit préférentiellement les réponses reçues en réponses génériques exploitables par le système 100 de collecte de données.

## Revendications

1. Système de collecte de données (100) destiné à effectuer une collecte de données auprès de plateformes informatiques accessibles via des interfaces d'accès (101, 102, 103), le système de collecte de données (100) comportant :
- un métamoteur de recherche (130) configuré pour opérer sous un format générique de requêtes afin d'ordonner la collecte de données ;
- un traducteur configuré pour transcrire les requêtes générées par le métamoteur de recherche (130) dans le format générique en requêtes spécifiquement adaptées aux interfaces d'accès (101, 102, 103) des plateformes informatiques auxquelles lesdites requêtes sont destinées, le traducteur (120) étant équipé d'un greffon (111, 112, 113) spécifique à chaque dite interface d'accès (101, 102, 103) ;
- un gestionnaire d'identité (140) configuré pour paramétrer le traducteur (120) avec des paramètres d'accès spécifiques aux plateformes informatiques auxquelles lesdites requêtes sont destinées ; et
- un orchestrateur (150) configuré pour coordonner le métamoteur de recherche (130) et le gestionnaire d'identité (140), afin de réaliser la collecte de données auprès des plateformes informatiques,
le système de collecte de données (100) étant tel que le métamoteur de recherche (130) comporte trois sous-métamoteurs de recherche :
- un premier sous-métamoteur de recherche (131) dédié à des programmations de surveillance régulière par collecte de données ;
- un deuxième sous-métamoteur de recherche (132) dédié aux requêtes à vocation unique, afin de permettre d'effectuer une collecte immédiate de données à la demande ; et
- un troisième sous-métamoteur de recherche (133) dédié à une investigation ponctuelle par recherches itératives ;
le système de collecte de données (100) étant en outre tel que :
- le premier sous-métamoteur de recherche (131) est configuré pour utiliser un descripteur (311) d'entités à surveiller, et un descripteur (312) de filtrage comportant des caractéristiques de filtres ;
- le premier sous-métamoteur de recherche (131) et/ou le troisième sous-métamoteur de recherche (133) sont configurés pour utiliser un descripteur (313) de contraintes comportant des informations de contraintes d'identité et/ou de contraintes de priorité ; et
- le deuxième sous-métamoteur de recherche (132) et/ou le troisième sous-métamoteur de recherche (133) sont configurés pour utiliser un descripteur (321) de règles relatives à des ressources servant de référence à la collecte de données, et un descripteur (322) de règles relatives à des entités servant de référence à la collecte de données.

2. Système de collecte de données (100) selon la revendication 1, dans lequel le gestionnaire d'identité (140) est configuré pour utiliser un descripteur (161) d'informations d'identification, un descripteur (162) d'informations de mandataire, et un descripteur (163) de comportement et d'artefacts.

3. Système de collecte de données (100) selon la revendication 1 ou 2, dans lequel le métamoteur de recherche (130) est configuré pour opérer sous un format générique de réponses afin de traiter la collecte de données, et le traducteur (120) est configuré pour transcrire des réponses reçues via les interfaces d'accès (101, 102, 103) en réponses au format générique.

4. Système de collecte de données (100) selon l'une quelconque des revendications 1 à 3, dans lequel au moins un moteur de recherche est implémenté dans au moins un greffon respectif pour réaliser recherche et collecte de données (111, 112, 113) auprès de la plateforme informatique à laquelle ledit greffon (111, 112, 113) correspond spécifiquement.

5. Procédé de collecte de données destiné à effectuer une collecte de données auprès de plateformes informatiques accessibles via des interfaces d'accès (101, 102, 103), le procédé étant implémenté par un système de collecte de données (100), le procédé comportant :
- générer (402), par un métamoteur de recherche (130) du système de collecte de données (100), sous un format générique, des requêtes afin d'ordonner la collecte de données ;
- transcrire (404), par un traducteur (120) du système de collecte de données (100), les requêtes générées par le métamoteur de recherche (130) dans le format générique en requêtes spécifiquement adaptées aux interfaces d'accès (101, 102, 103) des plateformes informatiques auxquelles lesdites requêtes sont destinées, le traducteur (120) étant équipé d'un greffon (111, 112, 113) spécifique à chaque dite interface d'accès (101, 102, 103) ;
- paramétrer le traducteur (120), par un gestionnaire d'identité (140) du système de collecte de données (100), avec des paramètres d'accès spécifiques aux plateformes informatiques auxquelles lesdites requêtes sont destinées ; et
- coordonner le métamoteur de recherche (130) et le gestionnaire d'identité (140), par un orchestrateur (150) du système de collecte de données (100), afin de réaliser la collecte de données auprès des plateformes informatiques ;
le système de collecte de données (100) étant tel que le métamoteur de recherche (130) comporte trois sous-métamoteurs de recherche :
- un premier sous-métamoteur de recherche (131) dédié à des programmations de surveillance régulière par collecte de données ;
- un deuxième sous-métamoteur de recherche (132) dédié aux requêtes à vocation unique, afin de permettre d'effectuer une collecte immédiate de données à la demande ; et
- un troisième sous-métamoteur de recherche (133) dédié à une investigation ponctuelle par recherches itératives ;
le procédé étant en outre tel que :
- le premier sous-métamoteur de recherche (131) utilise un descripteur (311) d'entités à surveiller, et un descripteur (312) de filtrage comportant des caractéristiques de filtres ;
- le premier sous-métamoteur de recherche (131) et/ou le troisième sous-métamoteur de recherche (133) utilisent un descripteur (313) de contraintes comportant des informations de contraintes d'identité et/ou de contraintes de priorité ; et
- le deuxième sous-métamoteur de recherche (132) et/ou le troisième sous-métamoteur de recherche (133) utilisent un descripteur (321) de règles relatives à des ressources servant de référence à la collecte de données, et un descripteur (322) de règles relatives à des entités servant de référence à la collecte de données..

6. Produit programme d'ordinateur comportant des instructions pour implémenter le procédé selon la revendication 5, lorsque lesdites instructions sont exécutées par un processeur.

7. Support de stockage d'informations stockant un programme d'ordinateur comportant des instructions pour implémenter le procédé selon la revendication 5, lorsque lesdites instructions sont lues depuis le support de stockage d'informations et exécutées par un processeur.
